# EUROPÄISCHE PATENTSCHRIFT

(11) **EP 1 936 223 B1**
(45) Veröffentlichungstag und Bekanntmachung des Hinweises auf die Patenterteilung: **30.11.2011**
(21) Anmeldenummer: 07118647.2
(22) Anmeldetag: 17.10.2007
(51) Int. Cl.: F16D 23/02, F16D 23/06

(54) **Synchronring**
Synchronizer ring
Anneau de synchronisation

(30) Priorität: 22.12.2006 EP 06126962
(43) Veröffentlichungstag der Anmeldung: 25.06.2008
(73) Patentinhaber: Sulzer Friction Systems (Germany) GmbH, 28719 Bremen (DE)
(72) Erfinder: Christoffer, Ulf, 27755 Delmenhorst (DE); Spreckels, Dr., Marcus, 28359 Bremen (DE)
(74) Vertreter: Sulzer Management AG

(56) Entgegenhaltungen:
- EP-A1- 0 717 212
- WO-A-00/11367
- WO-A-03/062659
- JP-A- 8 290 227

## Beschreibung

Die Erfindung betrifft einen Synchronring für eine Synchronisiereinrichtung eines schaltbaren Zahnräderwechselgetriebes gemäss dem Oberbegriff des unabhängigen Anspruchs 1.

Synchronringe dienen in einem mechanischen schaltbaren Zahnräderwechselgetriebe, z.B. in Fahrzeuggetrieben dazu, die während eines Gangwechsels auftretenden Relativgeschwindigkeiten zwischen Gangrad und Getriebewelle aneinander anzugleichen. Die Synchronisation wird dabei durch Reibung zwischen den entsprechenden Reibpartner erzielt. Die Funktionsweise solcher Getriebe und der Ablauf des Synchronisationsvorgangs sind an sich bekannt und brauchen dem Fachmann hier nicht mehr näher erläutert zu werden.

Zum Schutz gegen vorzeitigen Verschleiss und / oder zur Verbesserung der Reibcharakteristik ist es bekannt, die Reibflächen von Synchronringen, die in der Regel aus einem Metall oder einer Metalllegierung, wie beispielsweise aus Messing oder Stahl gefertigt sind, mit einer Reibschicht zu versehen. Dabei sind ganz verschiedene Typen von Reibschichten im Gebrauch, z.B. thermische Spritzschichten aus Molybdän, Carbon-Reibschichten oder Reibschichten aus anderen Materialien.

Durch immer grösser werdende Belastungen, die im Betriebszustand auf die Synchronringe einwirken, sind jedoch nicht nur immer grössere Anforderungen an die Eigenschaften der Reibflächen gestellt, sondern auch die Festigkeit und Eigensteifigkeit der Synchronringe als solches, d.h. des Synchronringkörpers sind zunehmend Gegenstand aktueller Fortentwicklungen im Getriebebau.

In der DE 197 13 304 B4 ist beispielsweise ein Synchronring offenbart, der aus einem dünnwandigen, durchhärtbaren Stahlband spanlos geformt ist, wobei an einer Anlagefläche bzw. an von der Reibfläche abstehenden Bereichen des Synchronrings unter Beibehaltung des Traganteils der Reibfläche Mittel zur Versteifung vorgesehen sind.

Dabei können die Mittel zur Versteifung gemäss DE 197 13 304 B4 durch verschiedene Massnahmen realisiert sein, z.B. durch einen Festbord, der von einem Rand der Reibfläche ausgehend einen radial nach innen gerichteten Bord bildet, oder ein freies Ende des Synchronrings kann stirnseitig mit einer die Wandstärke vergrössernden Prägung oder Stauchung versehen sein.

Obwohl durch die in der DE 197 13 304 B4 diskutierten Massnahmen eine Erhöhung der Festigkeit und Steifigkeit des Synchronrings erzielbar ist, haben alle dort gezeigten Lösungen einen entscheidenden Nachteil, der insbesondere daraus resultiert, dass als zentrales Merkmal dieser Synchronringe zwingend die Beibehaltung des Traganteils der Reibfläche gefordert wird, ganz gleich auf welche Art und Weise bzw. mit welchen Massnahmen die Versteifung des Synchronrings vorzunehmen ist.

Bei dieser Art von Synchronringen ist nämlich zu befürchten, dass im Betriebszustand, insbesondere unter hohen Belastungen und / oder wenn sehr schnelle Schaltvorgänge des Getriebes gefordert sind, eine nur ungenügende Schmierung zwischen der Anlagefläche des Synchronrings und seinem Gegenpart stattfindet. Das liegt unter anderem daran, dass beim Synchronisationsvorgang durch axialen Druck auf die Anlagefläche des Synchronrings zu viel Öl in radiale Richtung verdrängt wird, so dass die Anlagefläche, die sich mit einer bestimmten Relativgeschwindigkeit in Bezug auf ihren Gegenpart drehend bewegt, mehr oder weniger ohne Schmierung mit ihrem Gegenpart in reibendem Kontakt steht, was zu vorzeitigem Verschleisserscheinungen an Synchronring und dessen Gegenpart, im schlimmsten Fall unter starken Belastungen zu spontanen Beschädigungen der entsprechenden Flächen führt.

Die WO 00/11367 A1 offenbart ein Synchronringset mit einem Synchronring und einem Innenring, wobei am Synchronring eine Ausstellung oder Durchstellung und am Innenring ein Hinterschnitt vorgesehen ist.

In der DE 35 19811 A1 ist ein Träger für einen konusförmigen Synchronring beschrieben, der einen drei geteilten äusseren Zahnkranzring aufweist und in einem zylindrischen Hohlraum einer Synchronringnabe, die häufig auch als Synchronringkörper bezeichnet wird, angeordnet ist und über Anschläge, die als Lappen ausgebildet sind, mit der Synchronringnabe im wesentlichen drehfest verankert ist. Im wesentlichen drehfest bedeutet dabei im Rahmen dieser Anmeldung, dass bis auf kleine Winkelauslenkungen in Umfangsrichtung der Synchronring drehfest mit der Synchronringnabe verbunden ist.

Die DE 198 53 856 A1 beschreibt eine Fortbildung des zuvor beschriebenen Synchronrings, wobei sich der Synchronring der DE 198 53 856 A1 dadurch auszeichnet, dass dessen Breite im wesentlichen nur durch die erforderliche Breite seiner Reibfläche bestimmt wird. Dies wird dadurch erreicht, dass ein Anschlag, die funktionell den Lappen gemäss DE 35 19811 A1 entsprechen, an oder nahe an einem Endabschnitt des Ringkörpers mit einem kleineren Konusdurchmesser angeordnet ist, sowie die Kontur des Anschlags in radialer Richtung über die Kontur der Aussenmantelfläche des Ringkörpers hervorsteht.

Beide Synchronringe sind zwar im Betriebszustand gegen eine Verdrehung gegenüber der Synchronringnabe durch die Lappen oder Anschläge im Prinzip gut gesichert, jedoch fehlt es beiden an einer zuverlässigen Führung in radialer Richtung im zylindrischen Hohlraum in der Synchronringnabe.

Das heisst, gegen eine Verdrehung in Umfangsrichtung in Bezug auf die Synchronringnabe sind die aus dem Stand der Technik bekannten Synchronring zwar normalerweise gesichert, jedoch neigen diese Ringe aufgrund ihrer konischen äusseren Form, die mit einer zylindrischen inneren Kontaktfläche im zylindrischen Hohlraum der Synchronringnabe zusammenwirkt, verstärkt zu unkontrollierten Bewegungen, z.B. zu kleinen radialen Auslenkungen oder Kippbewegungen, die sich z.B. in unangenehmen Vibrationen äussern können, damit die Zuverlässigkeit und Genauigkeit des Synchronisationsvorgangs negativ beeinflussen, was zu einer Erhöhung der Schaltzeiten führen kann, zu schnellerem und erhöhtem Verschleiss der Reibfläche und des gesamten Synchronrings als solchem führt, und somit zu kürzeren Reparatur- und Wartungsintervallen führt, ganz abgesehen davon, dass durch die schlechte Führung des Synchronrings im Hohlraum der Synchronringnabe und den daraus resultierenden unkontrollierten Bewegungen der Schalt- und Fahrkomfort eines Kraftfahrzeugs deutlich eingeschränkt wird. Diese Effekte werden umso bedeutender, je mehr Leistung bzw. Drehmoment durch ein entsprechendes Getriebe geschaltet werden muss.

In einem einfachen Fall besteht ein Synchronringset aus einem Synchronring und einem Innenring, wobei der Innenring aus einem Metall, aus messing, einem Sintermetall, einem Kunststoff, einem Verbundwerkstoff oder einem anderen geeigneten Werkstoff aufgebaut sein kann, und um die Reibung mit einem Reibpartner zu verbessern, mit einer Reibbbeschichtung, z.B. mit einem Carbonbelag beschichtet oder belegt sein kann. Im Synchronring selbst, der zumindest abschnittsweise einen äusseren Zahnring aufweist, sind in an sich bekannter Weise Ausnehmungen vorgesehen, in die Laschen des Innenrings eingreifen können, so dass der Innenring drehfest mit dem Synchronring verbunden ist.

Da ist es wichtig, dass der Innenring in keinem Betriebszustand sich wesentlich in axialer Richtung gegen den Synchronring verschiebt, da in einem solchen Fall die Lasche des Innenrings aus den Ausnehmungen des Synchronrings herausgleiten kann, so dass der Innenring nicht mehr gegen den Synchronring gegen Verdrehen gesichert ist, was zur zerstörung oder zumindest zu einer erheblichen Beschädigung des Getriebes führen kann.

Wenn ein Synchronringset über längere Zeit im Betrieb ist, ist es selbstverständliche einem bestimmten Verschleiss unterworfen, der zu einer mechanischen Abnutzung der Komponenten des Synchronringsets führt, z.B. durch Abnutzung der Reibbeschichtung, also z.B. der Carbon Reibschicht, so dass vorgegebene Toleranzen nicht mehr eingehalten werden, wodurch es schliesslich möglich ist, dass die Lasche des Innenrings aus der Ausnehmung im Synchronring springt, was zu den oben erwähnten Scäden am Getriebe führt.

Es müssen also der der Auslegung des Synchronringsets die vorhandenen oder im laufenden Betrieb mit der Zeit sich einstellenden Toleranzen der einzelnen Bauteile berücksichtigt werden. Daher versucht man die Länge der Laschen des Innenrings zu vergrössern, als es eigentlich für die Funktion (nämlich Halten des Innenrings im Synchronring) des Innenrings ohne Toleranzbetrachtungen, z.B. aufgrund von Abnutzung, nötig wäre.

Diese Laschen können aber nicht beliebig lang gewählt werden, weil es sonst zu einer Kollision mit den Bauteilen hinter dem Synchronring (Synchronringkörper) kommen kann.

Ein Lösunsgansatz ist, im Synchronring auf Höhe der Aussparungen für die Laschen des Innenrings Aufwürfe oder Ausstellungen, z.B. in Form von Verdickungen vorzusehen. Dadurch würden auch kürzere Laschen noch sicher gehalten. Der Nachteil davon ist, dass so die Verschleissreserve, die dem Fachmann allgemein als Abstand zwischen Innenring und Synchronring in axialer Richtung bekannt ist, reduziert wird, was natürlich auch nicht gewünscht ist. Eine Lösung für dieses Problem wäre es, die Höhe des Innenrings zwischen den Laschen zu reduzieren. Eine Folge wäre dann aber der Verlust von Reibfläche am Innenring, was ebenfalls nicht zielführend ist.

Die Aufgabe der Erfindung ist es daher, einen verbesserten Synchronring bereit zustellen, der einerseits gewährleistet, dass der Innenring mit den Laschen in jedem Betriebszustand, auch nach längerem Gebrauch und einer damit verbundenen erheblichen Abnutzung, jederzeit fest im Synchronring verankert bleibt, wobei jedoch die Laschen des Innenrings im wesentlichen nicht verlängert werden müssen, gleichzeitig die Höhe des Innenrings zwischen den Laschen nicht reduziert wird, so dass kein Verlust von Reibfläche stattfindet und gleichzeitig die Verschleissreserve erhalten bleibt.

Die diese Aufgaben lösenden Gegenstände der Erfindung sind durch die Merkmale des unabhängigen Anspruchs 1 gekennzeichnet.

Die abhängigen Ansprüche beziehen sich auf besonders vorteilhafte Ausführungsformen der Erfindung.

Die Erfindung betrifft einen Synchronring für eine Synchronisiereinrichtung eines schaltbaren Zahnräderwechselgetriebes, umfassend einen konischen Ringkörper mit einer inneren Reibfläche und einer äusseren Einbaufläche, die den Ringkörper in einer radialen Umfangsrichtung jeweils begrenzen, und sich unter einem vorgebbaren Reibwinkel konisch um eine axiale Synchronringachse des Synchronrings erstrecken, wobei der Ringkörper in axialer Richtung an einem grössten Konusdurchmesser durch eine im wesentlichen sich senkrecht zur Synchronringachse erstreckenden Zahnradfläche mit Zahnrad begrenzt ist, und an einem kleinsten Konusdurchmesser durch eine Fläche begrenzt ist, und an der Fläche des Synchronrings eine Ausnehmung zur Fixierung des Innenrings mit einer am Innenring vorgesehenen Verdrehsicherung, insbesondere in Form einer Lasche vorgesehen ist. Erfindungsgemäss ist an der Fläche des Synchronrings eine Ausstellung und / oder eine Durchstellung vorgesehen und am Innenring ist ein Hinterschnitt vorgesehen, so dass die Durchstellung in den Hinterschnitt im Einbauzustand derart eingreift, dass durch die Durchstellung eine Gesamt Bauhöhe des Synchronringsets aus Innenring und Synchronring nicht vergrössert wird.

Erfindungsgemäss sind also z.B. Aufstellungen, oder Ausbuchtungen, oder Wülste oder andere Arten von Durchstellungen im Synchronring im Einbauzustand des Innenrings im Synchronring bevorzugt direkt neben den Verdrehsicherungen, die bevorzugt durch an sich bekannte Laschen gebildet sind, anzubringen und den (durch den Fertigungsprozess sowieso in der regel vorhandenen) Hinterschnitt neben den Laschen des Innenrings soweit zu vergrössern, dass die Durchstellungen bzw. die Aufwürfe oder Ausstellungen dort Platz finden und einrasten können.

So ist durch die Erfindung die Sicherheit gegen Auseinanderfallen des Synchronringsets gegeben und weder die Verschleissreserve noch die Grösse der zur Verfügung stehenden Reibflächen werden reduziert.

Die Erfindung kann weiterhin bei allen Synchronringsystemen vorteilhaft verwendet werden, bei denen mehrere Bauteile ineinander greifen. Insbesondere auch bei Mehrfach-Synchronisierungen.

Dabei können die Hinterschnitte und die Durchstellungen im Prinzip beliebig realisiert sein, solange nur die Durchstellungen in die Hinterschnitte eingreifen können und die Durchstellungen entsprechen in den Hinterschnitten Platz finden.

In einem bevorzugten Ausführungsbeispiel ist die Durchstellung durch eine Umbiegung einer Kante und / oder durch eine lokale Aufdickung, die aufgeschweisst, durch gepresst, aufgeschraubt oder anders geeignet vorgesehen.

Und / oder die Durchstellung kann durch einen in Umfangsring des Synchronrings abschnittsweise umlaufenden Steg gebildet sein und / oder der Hinterschnitt kann durch einen in Umfangsrichtung des Synchronrings umlaufenden Hinterschnitt gebildet sein.

Dabei kann das Synchronringset selbstverständlich auch einen Doppelkonusring umfassen.

Der Hinterschnitt kann beispielsweise durch eine Einbeulung und / oder durch eine Ausfräsung und oder durch eine andere Form des Hinterschnitts gebildet sein.

Die Hinterschnitte und Durchstellung gemäss der vorliegenden Erfindung können auch an bei Synchronringsets für eine Synchronisiereinrichtung eines schaltbaren Zahnräderwechselgetriebes vorgesehen sein, die im folgenden noch eingehend beschrieben werden, und die z.B. einen Synchronringkörper mit einer Reibfläche und einer Abstützfläche umfassen, wobei sich die Reibfläche und die Abstützfläche derart in Umfangsrichtung um eine axiale Synchronringachse des Synchronrings erstrecken, dass ein Flächennormalenvektor der Abstützfläche parallel zur Synchronringachse liegt und sich die Reibfläche unter einem vorgebbaren Reibwinkel konisch um die Synchronringachse erstreckt. Der Synchronringkörper kann eine Verstärkung aufweisen, insbesondere eine radiale Verstärkung auf, die sich in Umfangsrichtung in einer vorgebbaren Breite angrenzend an die Abstützfläche erstreckt. Dabei ist die Abstützfläche von einer Ausnehmung im Synchronringkörper unterbrochen.

Die Abstützfläche solcher Synchronringe ist durch eine Ausnehmung im Synchronringkörper unterbrochen ist. Durch die Ausnehmung ist die zur Verfügung stehende Reibfläche zwar leicht reduziert, jedoch gewährleistet die Ausnehmung, dass im Betriebszustand, also während des Synchronisationsvorgangs, wenn die Abstützfläche mit ihrem Gegenpart in reibendem Kontakt steht, weil sich die Abstützfläche mit einer bestimmten Relativgeschwindigkeit in Bezug auf ihren Gegenpart dreht, auch unter hohem axialen Druck, der während des Synchronisationsvorgangs von dem Gegenpart der Abstützfläche auf die Abstützfläche übertragen wird, sich eine hydrodynamische Schmierung aufbauen kann, die zuverlässig Schäden durch zu hohe Reibungsbeanspruchung verhindert.

Während des Synchronisationsvorgangs haftet der Schmierölfilm sowohl an der Abstützfläche des Synchronrings, als auch an der Oberfläche des Gegenparts, die einen hohen axialen Druck auf den Synchronring ausübt, während sich die Abstützfläche und die entsprechende Oberfläche des Gegenparts gleichzeitig mit einer bestimmten Relativgeschwindigkeit um eine gemeinsame Achse gegeneinander drehen.

Die Ausnehmungen bilden dabei in den Bereichen der Abstützfläche, in denen die Ausnehmungen vorgesehen sind, ein Vorratsreservoir für eine gewisse Menge Schmieröl, das, da das Schmieröl gleichzeitig an der Abstützfläche und der Oberfläche des Gegenparts haftet, durch die relative Drehung dieser beiden Flächen gegeneinander, mitbewegt wird und in Richtung der Drehung aus der Ausnehmung heraus in einen sich verengenden Spalt, zwischen der Abstützfläche und der Oberfläche des Gegenparts gepresst wird, wodurch sich eine hydrodynamische Schmierung aufbaut, die die Abstützfläche und die Oberfläche des Gegenparts zuverlässig während des Synchronisationsvorgangs voneinander trennt, so dass keine schädliche Reibung zwischen den beiden Partnern mehr auftritt.

Bei einer bevorzugten Ausführungsform ist eine an sich bekannte Verdrehsicherung an einer der Abstützfläche gegenüber liegenden Seite des Synchronringkörpers vorgesehen.

In einem für die Praxis besonders wichtigen Ausführungsbeispiel ist die Verstärkung auf einer der Reibfläche gegenüber liegenden Seite am Synchronringkörper ausgebildet und die Verstärkung ist bevorzugt durch eine vergrösserte Wandstärke des Synchronringkörpers gebildet. Die Verstärkung kann dabei z.B. durch eine Prägung und / oder Stauchung des Synchronringkörpers in axialer Richtung im Bereich der Abstützfläche erreicht werden, so dass im Bereich der Abstützfläche eine etwas grössere Wandstärke des Synchronringkörpers erreicht wird, so dass eine Versteifung bzw. Verstärkung des Synchronrings erzielbar ist.

In einem anderen Ausführungsbeispiel kann die Verstärkung beispielsweise auch durch eine Festbord erreicht werden, der von einem Rand der Reibfläche ausgehend einen radial nach innen gerichteten Bord bildet oder die Verstärkung kann sich in jeder anderen geeigneten Art und Weise in Umfangsrichtung in einer vorgebbaren Breite angrenzend an die Abstützfläche erstrecken.

Ein erfindungsgemässer Synchronring kann dabei sowohl als Innensynchronring als auch als Aussensynchronring ausgestaltet sein, d.h. es kann eine äussere Umfangsfläche und / oder eine innere Umfangsfläche als Reibfläche ausgestaltet sein.

In einem für die Praxis besonders wichtigen Ausführungsbeispiel der vorliegenden Erfindung ist die Ausnehmung im Synchronringkörper eine bogenförmige Ausnehmung, insbesondere eine halbkreisförmige Ausnehmung.

Es versteht sich, dass je nach Anforderung die Ausnehmung im Synchronringkörper auch jede andere geeignete Form haben kann. So kann die Ausnehmung im Speziellen z.B. auch eine dreieckförmige Ausnehmung sein.

Insbesondere dann, wenn ein sehr stabiler hydrodynamischer Schmierfilm und / oder wenn im Schmierfilm ein hoher Druck aufgebaut werden muss, kann eine Kontur der Ausnehmung in eine Umfangsrichtung, die im Betriebszustand einer Drehrichtung des Synchronrings entspricht, eine kleinere Steigung aufweisen, als eine Steigung, die die Kontur in der entgegen gesetzten Umfangsrichtung aufweist. Dadurch verengt sich der Spalt, in den das Schmieröl im Betriebszustand durch Drehung gepresst wird, über eine kürzere Distanz, so dass ein schnellerer und / oder stärkerer Druckaufbau im Schmierölfilm zwischen Abstützfläche und der Oberfläche des Gegenparts der Abstützfläche aufgebaut werden kann.

Je nach Anwendung kann die Reibfläche mit einer Verschleiss mindernden und / oder einer reibungsoptimierten Reibschicht versehen ist. Die Reibschicht kann dabei z.B. eine thermische Spritzschicht aus Molybdän, eine Carbon-Reibschicht oder jede andere geeignete Reibschicht sein, die die Reibeigenschaften eines erfindungsgemässen Synchronrings verbessert.

Der Synchronring ist dabei bevorzugt ein spanlos, aus einem dünnwandigen Stahlband geformter Synchronring, der als ein tiefgezogenes Bleichteil ausgebildet ist, und ist aus einem Stahl, vorzugsweise aus C55, C80 oder C80M Stahl, bevorzugt C35 oder C45 Stahl und / oder einem anderen geeigneten Metall und / oder einer geeigneten Metallegierung, z.B. Messing gefertigt.

Auch eine weitere Klasse von Synchronringen bzw. Synchronringsets, die im folgenden beschrieben wird, kann mit einem erfindungsgemässen Hinterschnitt und einer erfindungsgemässen Ausstellung, wie oben beschrieben ausgestattet sein und ist somit auch von der vorliegenden Erfindung abgedeckt.

Die zuvor erwähnten Synchronringe bzw. Synchronringsets für eine Synchronisiereinrichtung eines schaltbaren Zahnräderwechselgetriebes, umfassen einen konischen Ringkörper mit einer inneren Reibfläche und einer äusseren Einbaufläche, die den Ringkörper in einer radialen Umfangsrichtung jeweils begrenzen, und sich unter einem vorgebbaren Reibwinkel konisch um eine axiale Synchronringachse des Synchronrings erstrecken. Dabei ist der Ringkörper in axialer Richtung an einem grössten Konusdurchmesser durch eine im wesentlichen sich senkrecht zur Synchronringachse erstreckenden Zahnradfläche mit Zahnrad begrenzt, und an einem kleinsten Konusdurchmesser durch eine Nabenfläche begrenzt. Zur Fixierung des Synchronrings in einem zylindrischen Hohlraum einer Synchronringnabe ist eine Verdrehsicherung vorgesehen, die integral mit dem Ringkörper verbunden ist und sich von der Zahnradfläche des Ringkörpers in Richtung zur Nabenfläche erstreckt. Zur Führung der Einbaufläche an einer Innenfläche des zylindrischen Hohlraums der Synchronringnabe ist am Ringkörper in einem vorgebbaren Bereich zwischen der Zahnradfläche und der Nabenfläche ein Führungselement vorgesehen.

Wesentlich ist bei diesen Anordnungen, dass zur Abstützung bzw. Zentrierung und Führung der Einbaufläche an einer Innenfläche des zylindrischen Hohlraums der Synchronringnabe am Ringkörper in einem vorgebbaren Bereich zwischen der Zahnradfläche und der Nabenfläche ein Führungselement vorgesehen ist, das bevorzugt in Form von mehreren Ausbeulungen, die über die Einbaufläche in Umfangsrichtung verteilt sind, bereitgestellt wird.

Dadurch, dass zusätzlich zu den Führungselementen auch Verdrehsicherungen, bevorzugt in Form von Sicherungslaschen vorgesehen sind, ist ein erfindungsgemässer Synchronring gleichzeitig gegen eine Verdrehung gegenüber der Synchronringnabe durch die Verdrehsicherungen hervorragend gesichert, und ist gleichzeitig zuverlässig, insbesondere in Bezug auf die radiale Richtung im zylindrischen Hohlraum in der Synchronringnabe geführt und zentriert.

Das heisst, ein solcher erfindungsgemässer Synchronring neigt aufgrund seiner konischen äusseren Form, die mit einen zylindrischen inneren Kontaktfläche im zylindrischen Hohlraum der Synchronringnabe zusammenwirkt, nicht mehr, wie die aus dem Stand der Technik bekannten konischen Synchronringe, zu unkontrollierten Bewegungen, z.B. zu kleinen radialen Auslenkungen oder Kippbewegungen, die sich z.B. in unangenehmen Vibrationen äussern können. Dadurch wird die Zuverlässigkeit und Genauigkeit des Synchronisationsvorgangs durch Verwendung eines erfindungsgemässen Synchronrings deutlich positiv beeinflusst, was zu einer Erniedrigung der Schaltzeiten betragen kann, den Verschleiss an der Reibfläche und des gesamten Synchronrings als solchem reduziert und somit zu längeren Reparatur- und Wartungsintervallen beiträgt, ganz abgesehen davon, dass durch die hervorragende Führung des erfindungsgemässen Synchronrings im Hohlraum der Synchronringnabe der Schalt- und Fahrkomfort eines Kraftfahrzeugs deutlich erhöht wird. Diese positiven Effekte wirken sich umso stärker aus, je mehr Leistung bzw. Drehmoment durch ein entsprechendes Getriebe geschaltet werden muss.

In einem speziellen Ausführungsbeispiel ist die Zahnradfläche durch eine Ausnehmung, insbesondere durch eine, oder zwei, oder drei, oder mehr als drei Ausnehmungen unterbrochen, und / oder die Verdrehsicherung ist in der Ausnehmung mit dem Ringkörper verbunden.

Dabei sind bevorzugt, aber nicht notwendig, ebenso viele Verdrehsicherungen wie Ausnehmungen in der Zahnradfläche vorgesehen. In einem für die Praxis besonders wichtigen Ausführungsbeispiel sind genau drei Verdrehsicherungen vorgesehen, die bei minimalem konstruktivem Aufwand ein Maximum an Verdrehsicherung garantieren.

Insbesondere kann die Verdrehsicherung als Sicherungslasche ausgebildet sein, die sich auf der der Synchronringachse abgewandten Seite des Ringkörpers im wesentlichen gleichgerichtet zur Einbaufläche erstreckt.

In einem ganz speziellen Ausführungsbeispiel kann die Sicherungslasche eine Sicherungslasche mit einer taschenförmigen Ausnehmung sein, wodurch im Einzelfall eine verbesserte Verankerung des Synchronrings in der Synchronringnabe erreichbar ist.

Die Zahl der Führungselemente, die an einem solchen erfindungsgemässen Synchronring vorgesehen sein können, liegt bevorzugt zwischen zwei und neun Führungselementen, im Speziellen drei Führungselemente, wobei besonders bevorzugt sechs Führungselemente vorgesehen sind, und / oder jeweils zwei Führungselemente in Umfangsrichtung in im wesentlichen gleichem Abstand und / oder jeweils zwei Führungselemente zwischen zwei Verdrehsicherungen angeordnet sind, wodurch bei minimalem konstruktivem Aufwand ein Höchstmass an radialer Führung gewährleistbar ist.

In einem für die Praxis besonders wichtigen Ausführungsbeispiel, ist das Führungselement in Form einer Ausbeulung des Ringkörpers an der Einbaufläche ausgebildet, welche Ausbeulung sich von der Synchronringachse radial weg nach aussen erstreckt.

Bevorzugt ist auf oder an der Reibfläche ein Verschleiss minderndes und / oder ein reibungsoptimiertes Reibungsmittel, insbesondere eine Reibbeschichtung, im speziellen eine Molybdänbeschichtung und / oder ein Reibbelag, insbesondere ein Carbon-Reibbelag und / oder ein anderes Reibungsmittel vorgesehen.

Konstruktiv ist der Synchronring ein aus einem tiefziehbaren Blech hergestelltes Blechumformteil und / oder aus einem Stahl, vorzugsweise aus C55, C80 oder C80M Stahl, insbesondere aus C35 oder C45 Stahl gefertigt.

Die Erfindung bezieht sich weiter auf ein Synchronringset mit einem erfindungsgemässen Synchronring, sowie Schaltgetriebe für ein Fahrzeug, insbesondere für einen Personenkraftwagen, einen Transporter oder einen Lastkraftwagen mit einem Synchronring gemäss der vorliegenden Erfindung.

Im Folgenden wird die Erfindung an Hand der schematischen Zeichnung näher erläutert. Es zeigen:
- Fig. 1: ein erstes Ausführungsbeispiel eines erfindungsgemässen Synchronrings im Schnitt;
- Fig. 2: eine Synchronringset mit Synchronring und Innenring;
- Fig. 3: ein zweites Ausführungsbeispiel gemäss Fig. 2;
- Fig. 4: ein Ausführungsbeispiel mit einem zweiten Innenring;
- Fig. 5: das Ausführungsbeispiel der Fig. 4 aus einer anderen Perspektive;
- Fig. 6: ein drittes Ausführungsbeispiel gemäss Fig. 2;
- Fig. 7: ein Synchronringset gemäss Fig. 2 in perspektivischer Ansicht.

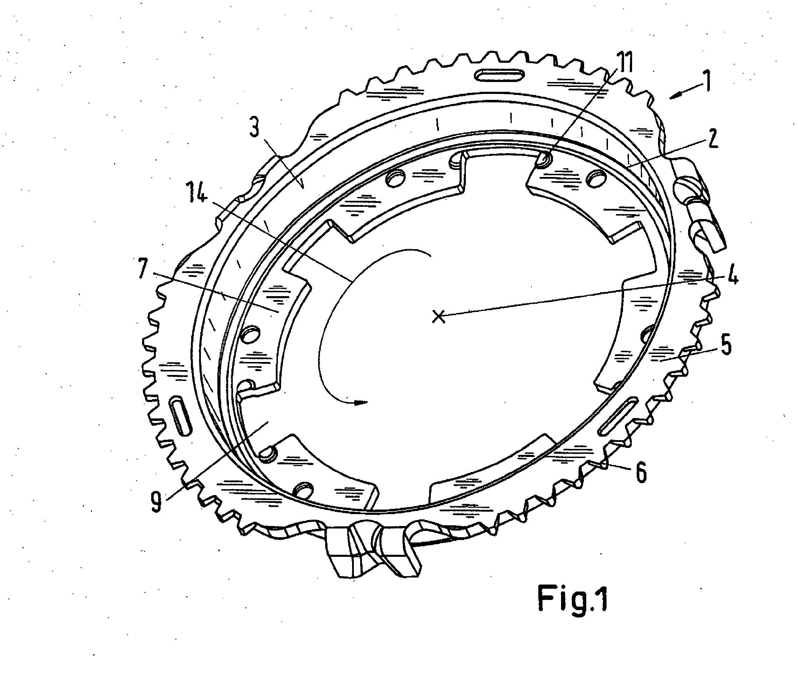

Die Fig. 1 bis Fig. 7 zeigen in schematischen Darstellungen, teilweise im Schnitt aus verschiedenen Ansichten Ausführungsbeispiele erfindungsgemässer Synchronringe, der im Folgenden gesamthaft mit dem Bezugszeichen 1 bezeichnet wird. Dabei bezeichnen gleiche Bezugszeichen in den verschiedenen Figuren technisch äquivalente Merkmale bzw. beziehen sich auf Merkmale mit technisch gleicher Funktion.

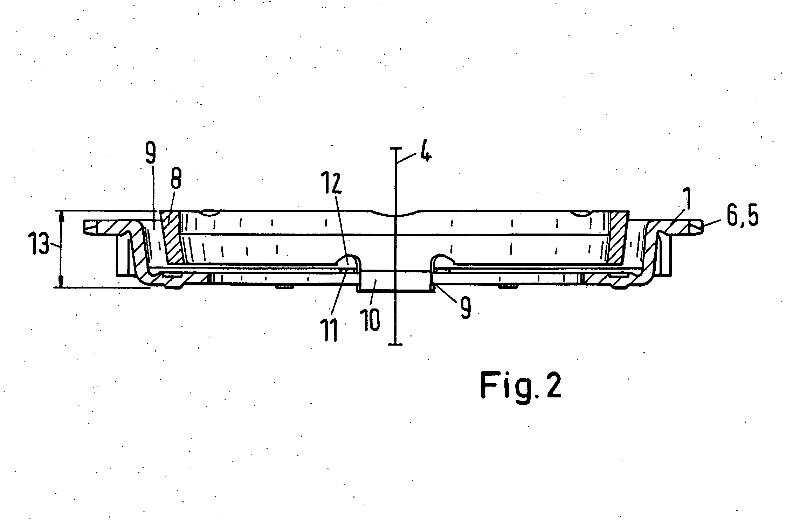

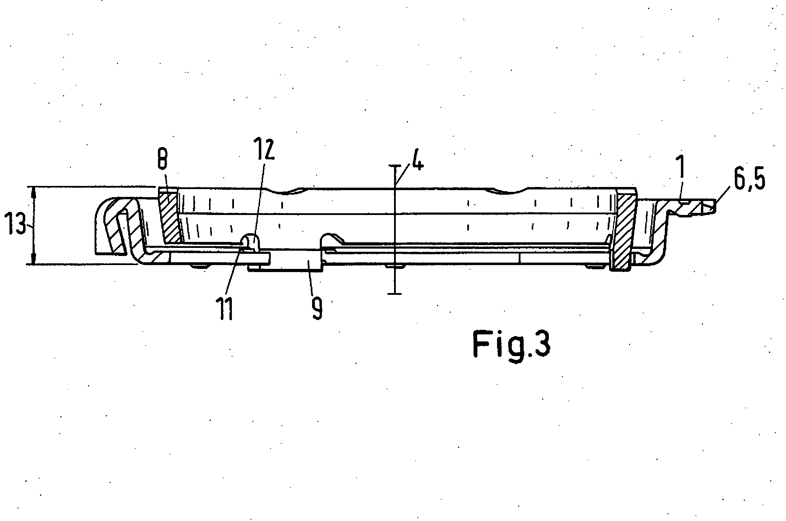

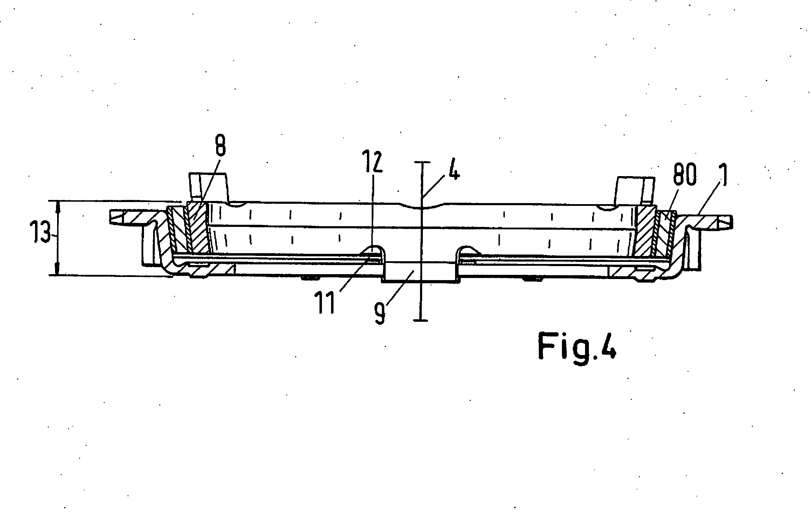

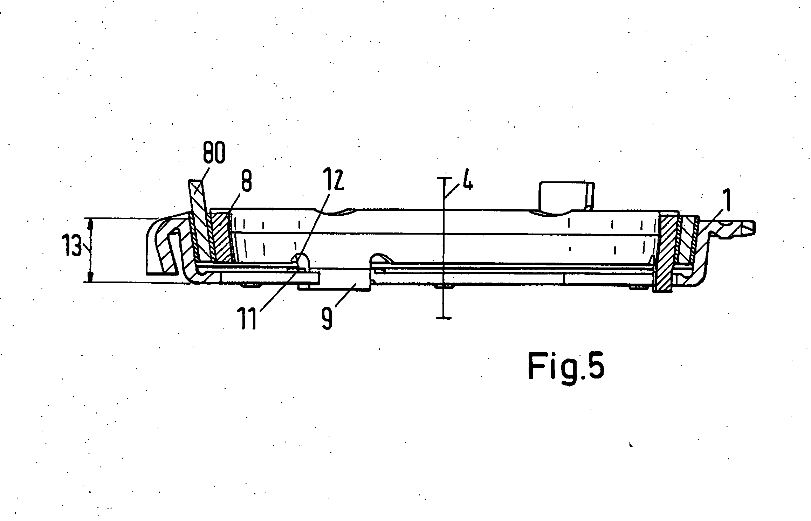

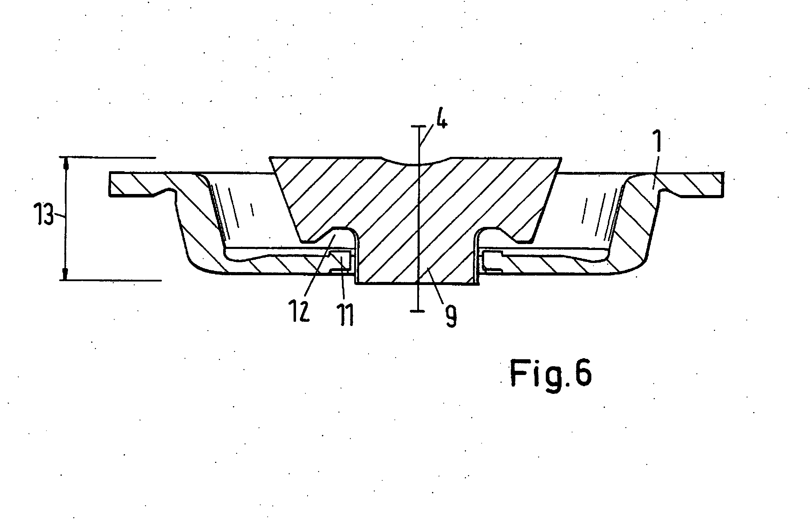

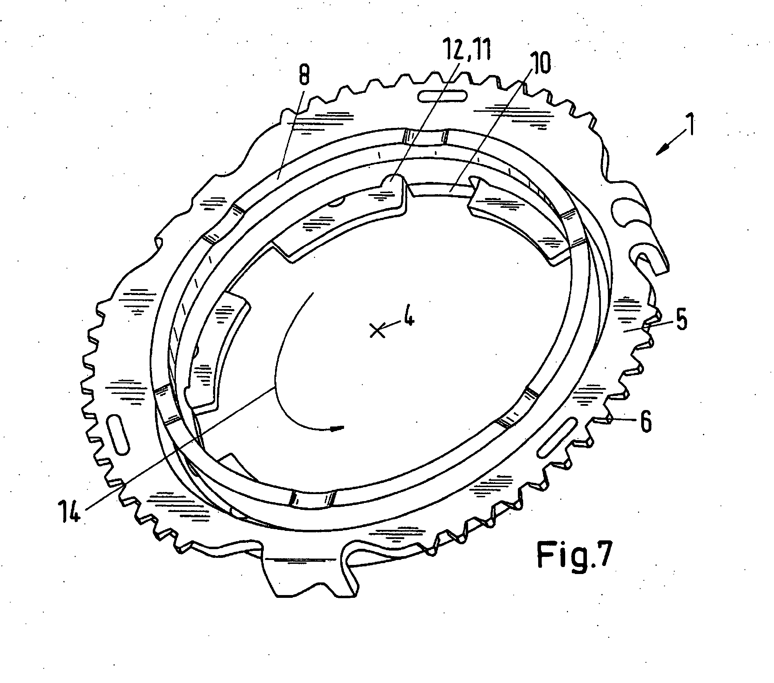

In Fig. 1 ist ein erstes Ausführungsbeispiel eines erfindungsgemässen Synchronrings im Schnitt dargestellt. Fig. 2 zeigt ein Synchronringset mit Synchronring und Innenring. In Fig. 3 ist ein zweites Ausführungsbeispiel gemäss Fig. 2 schematisch dargestellt. Fig. 4 zeigt ein Ausführungsbeispiel mit einem zweiten Innenring 80. In Fig. 5 ist das Ausführungsbeispiel der Fig. 4 aus einer anderen Perspektive dargestellt. Fig. 6 zeigt ein drittes Ausführungsbeispiel gemäss Fig. 2 und in Fig. 7 ist schliesslich ein Synchronringset gemäss Fig. 2 in perspektivischer Ansicht geziegt.

Die Ausführungsbeispiele von Synchronringen bzw. Synchronringsets der Fig. 1 bis 7 sind dabei an sich bekannt, ausser, dass die in Fig. 1 bis Fig. 7 dargestellten Beispiele erfindungsgemäss eine Durchstellung 11 und einen Hinterschnitt 12 aufweisen.

Die Fig. 1 bis 7 zeigen somit verschiedene Ausführungsbeispiele erfindunsgemässer Synchronringe 1 bzw. Synchronringsets für eine Synchronisiereinrichtung eines schaltbaren Zahnräderwechselgetriebes. Sie umfassen einen konischen Ringkörper 2 mit einer inneren Reibfläche 3 und einer äusseren Einbaufläche, die den Ringkörper 2 in einer radialen Umfangsrichtung jeweils begrenzen, und sich unter einem vorgebbaren Reibwinkel konisch um eine axiale Synchronringachse 4 des Synchronrings erstrecken, wobei der Ringkörper 2 in axialer Richtung an einem grössten Konusdurchmesser durch eine im wesentlichen sich senkrecht zur Synchronringachse 4 erstreckenden Zahnradfläche 5 mit Zahnrad 6 begrenzt ist und an einem kleinsten Konusdurchmesser durch eine Fläche 7 begrenzt ist. An der Fläche 7 des Synchronring 1 ist eine Ausnehmung 9 zur Fixierung des Innen rings 8 mit einer am Innenring 8 vorgesehenen Verdrehsicherung 10, insbesondere in Form einer Lasche 10 vorgesehen. Gemäss der Erfindung ist an der Fläche 7 des Synchronrings 1 eine Ausstellung 11 oder Durchstellung 11 vorgesehen und am Innenring 8 ist ein Hinterschnitt 12 vorgesehen, so dass die Durchstellung 11 in den Hinterschnitt 12 im Einbauzustand derart eingreift, dass durch die Durchstellung 11 eine Gesamt Bauhöhe 13 des Synchronringsets aus Innenring 8 und Synchronring1 nicht vergrössert wird.

Speziell ist die Durchstellung 11 durch eine Umbiegung einer Kante 11 und / oder durch eine lokale Aufdickung 11, die aufgeschweisst, durch gepresst, aufgeschraubt oder anders geeignet vorgesehen sein kann.

Dabei kann die Durchstellung 11 durch einen in Umfangsring 14 des Synchronrings abschnittsweise umlaufenden Steg 11 gebildet sein und / oder der Hinterschnitt 12 durch einen in Umfangsrichtung 14 des Synchronrings umlaufenden Hinterschnitt 12 gebildet sein.

Der Hinterschnitt 12 am Synchronring 1 kann auch durch eine Einbeulung 12 und / oder durch eine Ausfräsung 12 und oder durch eine andere Form des Hinterschnitts 12 gebildet sein.

Es versteht sich, dass alle in dieser Anmeldung explizit diskutierten Ausführungsbeispiele nur exemplarisch für die Erfindung zu verstehen sind und insbesondere auch alle geeigneten Kombinationen, die für spezielle Anwendungen vorteilhaft eingesetzt werden können, bzw. alle dem Fachmann nahe liegenden Weiterbildungen durch die Erfindung erfasst sind.

## Patentansprüche

1. Synchronring für eine Synchronisiereinrichtung eines schaltbaren Zahnräderwechselgetriebes, umfassend einen konischen Ringkörper (2) mit einer inneren Reibfläche (3) und einer äusseren Einbaufläche, die den Ringkörper (2) in einer radialen Umfangsrichtung jeweils begrenzen, und sich unter einem vorgebbaren Reibwinkel konisch um eine axiale Synchronringachse (4) des Synchronrings erstrecken, wobei der Ringkörper (2) in axialer Richtung an einem grössten Konusdurchmesser durch eine im wesentlichen sich senkrecht zur Synchronringachse (4) erstreckenden Zahnradfläche (5) mit Zahnrad (6) begrenzt ist, und an einem kleinsten Konusdurchmesser durch eine Fläche (7) begrenzt ist, und an der Fläche (7) des Synchronring eine Ausnehmung (9) zur Fixierung des Innenrings (8) mit einer am Innenring (8) vorgesehenen Verdrehsicherung (10), insbesondere in Form einer Lasche (10) vorgesehen ist, **dadurch gekennzeichnet, dass** an der Fläche (7) des Synchronrings eine Ausstellung oder Durchstellung (11) vorgesehen ist und am Innenring (8) ein Hinterschnitt (12) vorgesehen ist, so dass die Durchstellung (11) in den Hinterschnitt (12) im Einbauzustand derart eingreift, dass durch die Durchstellung (11) eine Gesamt Bauhöhe (13) des Synchronringsets aus Innenring (8) und Synchronring nicht vergrössert wird.

2. Synchronring nach Anspruch 1, wobei die Durchstellung (11) durch eine Umbiegung einer Kante (11) und / oder durch eine lokale Aufdickung (11), die aufgeschweisst, durch gepresst, aufgeschraubt oder anders geeignet vorgesehen ist.

3. Synchronring nach einem der vorangehenden Ansprüche, wobei die Durchstellung (11) durch einen in Umfangsring (14) des Synchronrings abschnittsweise umlaufenden Steg (11) gebildet ist und / oder der Hinterschnitt (12) durch einen in Umfangsrichtung (14) des Synchronrings umlaufenden Hinterschnitt (12) gebildet ist.

4. Synchronring nach einem der vorangehenden Ansprüche, wobei das Synchronringset einen Doppelkonusring umfasst.

5. Synchronring nach einem der vorangehenden Ansprüche, wobei der Hinterschnitt (12) durch eine Einbeulung (12) und / oder durch eine Ausfräsung (12) und oder durch eine andere Form des Hinterschnitts (12) gebildet ist.

6. Synchronringset mit einem Synchronring (1) nach einem der vorangehenden Ansprüche.

7. Schaltgetriebe für ein Fahrzeug, insbesondere für einen Personenkraftwagen, einen Transporter oder einen Lastkraftwagen mit einem Synchronring (1) nach einem der Ansprüche 1 bis 5 und / oder mit einem Synchronringset nach Anspruch 6.

## Claims

1. A synchronising ring for a synchronising apparatus of a switchable gear changing transmission, including a conical ring body (2) with an inner friction surface (3) and an outer installation surface which respectively bound the ring body (2) radially in a peripheral direction and extend conically at a pre-determinable friction angle about an axial synchronising ring axis (4) of the synchronising ring, wherein the ring body (2) is bounded in the axial direction at a largest cone diameter by a gear wheel surface (5) with gear wheel (6) extending substantially perpendicular to the synchronising ring axis (4) and is bounded at a smallest cone diameter by a surface (7) and wherein a recess (9) is provided at the surface (7) of the synchronising ring for fixing the inner ring (8) with a security against rotation (10) provided at the inner ring (8), particularly in the form of a lug (10), **characterised in that** a raised portion or displaced portion (11) is provided at the surface (7) of the synchronising ring and an undercut (12) is provided at the inner ring (8), so that the displaced portion (11) engages in the undercut (12) in the installed state in such a way that an overall constructional height (13) of the synchronising ring set consisting of the inner ring (8) and the synchronising ring is not enlarged by the displaced portion (11).

2. A synchronising ring in accordance with claim 1, wherein the displaced portion (11) is provided by a bending over of an edge (11) and/or by a local thickening (11) which is welded on, pressed through, screwed on or provided by other suitable means.

3. A synchronising ring in accordance with one of the previous claims,
wherein the displaced portion (11) is formed by a web (11) extending peripherally and section-wise in the peripheral ring (14) of the synchronising ring and/or the undercut (12) is formed by an undercut (12) extending peripherally in the peripheral direction (14) of the synchronising ring.

4. A synchronising ring in accordance with any one of the previous claims, wherein the synchronising ring set includes a double cone ring.

5. A synchronising ring in accordance with any one of the previous claims, wherein the undercut (12) is formed by a depression (12) and/or by a milled out feature (12) and by another form of the undercut (12).

6. A synchronising ring set with a synchronising ring (1) in accordance with any one of the previous claims.

7. A manual gear change transmission for a motor vehicle, in particular for a passenger vehicle, a transporter or a heavy goods vehicle, with a synchronising ring (1) in accordance with any one of the claims 1 to 5 and/or with a synchronising ring set in accordance with claim 6.

## Revendications

1. Anneau de synchronisation pour une installation de synchronisation d'une boîte de vitesses commutable, comprenant un corps annulaire conique (2) avec une face de frottement intérieure (3) et une face de montage extérieure, qui délimitent respectivement le corps annulaire (2) dans une direction de pourtour radiale, et s'étendent selon un angle de frottement prédéfinissable d'une manière conique autour d'un axe d'anneau de synchronisation axial (4) de l'anneau de synchronisation, où le corps annulaire (2), dans la direction axiale, est limité à un diamètre de cône le plus grand par une face de roue dentée (5) avec roue dentée (6) s'étendant sensiblement perpendiculairement à l'axe de l'anneau de synchronisation (4), et est limité à un diamètre de cône le plus petit par une face (7), et où est prévu à la face (7) de l'anneau de synchronisation un évidement (9) pour la fixation de l'anneau intérieur (8) avec une sécurité à l'encontre d'une rotation (10) prévue à l'anneau intérieur (8), en particulier sous la forme d'une languette (10), **caractérisé en ce qu'**il est prévu à la face (7) de l'anneau de synchronisation une partie proéminente (11) et à l'anneau intérieur (8) une partie en retrait (12) de sorte que la partie proéminente (11) s'engage dans la partie en retrait (12) à l'état de montage de telle sorte que par la partie proéminente (11), une hauteur de construction totale (13) de l'ensemble d'anneau de synchronisation formé par l'anneau intérieur (8) et l'anneau de synchronisation, n'est pas agrandie.

2. Anneau de synchronisation 1, dans lequel la partie proéminente (11) est réalisée par un pliage d'une arête (11) et/ou par un épaississement local (11), qui est soudé, pressé, vissé ou réalisé d'une autre manière appropriée.

3. Anneau de synchronisation selon l'une des revendications précédentes, dans lequel la partie proéminente (11) est formée par une barrette (11) s'étendant par section dans la direction périphérique (14) de l'anneau de synchronisation et/ou la partie en retrait (12) est formée par une partie en retrait (12) s'étendant dans la direction périphérique (14) de l'anneau de synchronisation.

4. Anneau de synchronisation selon l'une des revendications précédentes, où l'ensemble de l'anneau de synchronisation comprend un anneau conique double.

5. Anneau de synchronisation selon l'une des revendications précédentes, où la partie en retrait (12) est formée par un creux (12) et/ou par un fraisage (12) et ou par une autre forme de la partie en retrait (12).

6. Ensemble d'anneau de synchronisation avec un anneau de synchronisation (1) selon l'une des revendications précédentes.

7. Dispositif de changement de vitesse pour un véhicule, en particulier pour une voiture particulière, un transporteur ou un camion avec un anneau de synchronisation (1) selon l'une des revendications 1 à 5 et/ou avec un ensemble d'anneau de synchronisation selon la revendication 6.
